(19) Europäisches Patentamt
European Patent Office
Office européen des brevets

(11) Veröffentlichungsnummer: **0 464 758 A1**

(12) # EUROPÄISCHE PATENTANMELDUNG

(21) Anmeldenummer: **91110900.7**

(51) Int. Cl.[5]: **C01B 7/01**, C01B 7/07

(22) Anmeldetag: **01.07.91**

(30) Priorität: **05.07.90 DE 4021408**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Freyer, Walter, Dr.**
**Fuggerstrasse 7**
**W-8901 Leitershofen(DE)**
Erfinder: **Olffers, Theo**
**Breslauer Strasse 2**
**W-8906 Gersthofen(DE)**
Erfinder: **Riedel, Alfred, Dr.**
**Mohnweg 11**
**W-8901 Stadtbergen(DE)**

(54) **Verfahren zur Herstellung von reiner Salzsäure.**

(57) Es wurde ein Verfahren gefunden zur Herstellung einer AOX-armen, chlorfreien Salzsäure aus chlorwasserstoffhaltigen, organische Verunreinigungen enthaltenden Rohgasen. Die Rohgase werden einer thermischen Behandlung bei 800 bis 1600 °C zunächst in einer oxidierenden und dann in einer reduzierenden Atmosphäre unterworfen. Die nach der Absorption des Chlorwasserstoffs erhaltene Salzsäure ist chlorfrei und enthält praktisch keine organischen Verunreinigungen. Auch das Reingas ist chlorfrei.

EP 0 464 758 A1

Die Erfindung bezieht sich auf auf ein verbessertes Verfahren zur Herstellung von Salzsäure, die praktisch frei von organischen Chlorverbindungen und freiem Chlor ist, wobei ohne weitere Reinigungsschritte ein Abgas erhalten wird, das besagte Stoffe ebenfalls nur noch in Spuren enthält und ohne Nachreinigung in die Atmosphäre abgegeben werden kann.

Als Ausgangsstoffe werden chlorwasserstoff- und chlorhaltige Gase, die mit organischen Chlorverbindungen verunreinigt sind, und chlorhaltige Flüssigkeiten verwendet.

Bei der Chlorierung organischer Verbindungen im technischen Maßstab fällt in großen Mengen Chlorwasserstoff an, der üblicherweise durch Absorption in Wasser zu Salzsäure aufbereitet wird.

Zu den Reaktionen, bei denen sich Chlorwasserstoff als Nebenprodukt bildet, gehört z. B. die Chlorierung von Carbonsäuren zu teil- oder perchlorierten Carbonsäuren, beispielsweise die Chlorierung zu Mono- oder Trichloressigsäure:

$CH_3COOH + Cl_2 \rightarrow CH_2Cl - COOH + HCl$

$CH_3COOH + 3\ Cl_2 \rightarrow CCl_3 - COOH + 3\ HCl$

und auch die Umsetzung von Paraffinen mit Chlor:

$C_nH_{2n+2} + mCl_2 \rightarrow C_nH_{2n+2-m}Cl_m + mHCl$

Hierunter fällt die technisch bedeutsame Chlorierung von Methan zu seinen verschiedenen Chlorderivaten ebenso wie die Reaktion langkettiger Paraffine mit Chlor zu Chlorparaffinen mit verschiedenen Substitutionsgraden.

Ebenso wird HCl in Freiheit gesetzt bei der Herstellung von Estern und Säuren aus den Säurechloriden

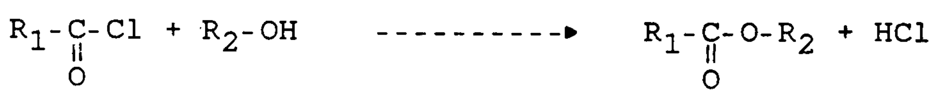

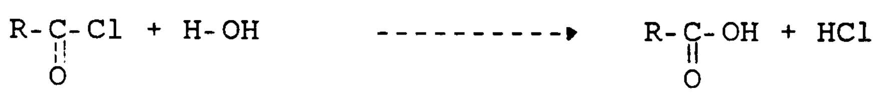

sowie bei der Kern- und Seitenkettenchlorierung von Aromaten unter Verwendung von Chlor, z. B. bei der Herstellung von Chlorderivaten des Benzols und des Toluols

$C_6H_6 + Cl_2 \rightarrow C_6H_5Cl + HCl$

$C_6H_5CH_3 + Cl_2 \rightarrow C_6H_5CH_2Cl + HCl.$

Da die Reaktionen nicht quantitativ den obigen Gleichungen folgen, sind die Hauptprodukte, insbesondere aber auch der anfallende Chlorwasserstoff - und demzufolge die daraus gewonnene Salzsäure - mit Nebenprodukten verunreinigt.

Ein Teil der Verunreinigungen verbleibt nach der Absorption im Abgas und muß daraus entfernt werden, bevor das Abgas in die Atmosphäre abgegeben werden kann. Auch die erzeugte Salzsäure muß gereinigt werden, bevor sie für die verschiedenen Zwecke - u.a. in der Lebensmittelindustrie - einsatzfähig ist.

Bei den Verunreinigungen, die in der Salzsäure und den Abgasen gefunden werden, handelt es sich zum größten Teil um chlorierte Kohlenwasserstoffe. Ein Maß für den Grad der Verunreinigung ist der Gehalt an Aktivkohle adsorbierbarer organischer Halogenverbindungen, der sogenannte AOX-Gehalt. Da bei fast allen Chlorierungsreaktionen das Chlor nicht vollständig verbraucht wird, findet man in der aus den Chlorierrestgasen gewonnenen Salzsäure und in den Abgasen meistens einen mehr oder weniger großen Rest von freiem Chlor.

Das freie Chlor ist im Abgas und in der Salzsäure ebenso unerwünscht wie andere Verunreinigungen und muß aus Gründen des Immissionsschutzes und zur Verbesserung der Säurequalität entfernt werden.

Es ist bekannt, daß man eine an organischen Verunreinigungen ärmere Salzsäure und ein Abgas erhält, welches mit solchen Verbindungen nur noch in Spuren kontaminiert ist, wenn man die Chlorierrestgase vor

der Absorption einer thermischen Behandlung unterwirft. Dies geschieht in der Weise, daß man die verunreinigten, chlorwasserstoffhaltigen Gase in geeigneten Brennkammern auf ca. 600 °C - 1200 °C erhitzt, wobei die Energiezufuhr meistens durch Verbrennen von Erdgas oder anderen Brennstoffen bei Sauerstoffüberschuß erfolgt und die Temperatur sich nach der Art der Verunreinigung richtet. Man erhält auf diese Weise Rauchgase, die zwar einen niedrigeren Gehalt an organischen Stoffen, wohl aber noch freies Chlor enthalten.

Dies rührt daher, daS bei Anwesenheit von Sauerstoff das ursprünglich im Chlorierrestgas enthaltene freie Chlor sich nicht quantitativ gemäß $2\ Cl_2 + 2\ H_2O \rightarrow 4\ HCl + 0_2$ zu HCl umsetzt, sondern sich sogar zusätzlich freies Chlor bilden kann.

Das freie Chlor löst sich bei der anschließenden Absorption des Chlorwasserstoffs zum Teil in der entstehenden Salzsäure, zum Teil verbleibt es im Abgas. Die Entchlorung sowohl der Salzsäure als auch des Abgases ist nur mit erheblichem verfahrenstechnischen Aufwand möglich. So gelingt die Entchlorung der Salzsäure beispielsweise durch Ausblasen oder durch Strippen nur unvollkommen und ist mit einem merklichen Konzentrationsverlust an Chlorwasserstoff verbunden.

Außerdem entstehen neue chlor- und chlorwasserstoffhaltige Abgasströme, welche ihrerseits wieder gereinigt werden müssen. Dies gelingt ebenso wie die Entchlorung der ursprünglichen Abgase im Prinzip nur durch alkalische Wäschen, wodurch das Abluftproblem in ein Abwasserproblem verwandelt wird.

Ein Verfahren zur Entfernung von Chlorwasserstoff und Chlor aus Verbrennungsgasen unter Gewinnung von Salzsäure, welches mit einer mehrstufigen Abgaswäsche arbeitet, ist bereits beschrieben worden (vgl. DE 3 611 886).

Weiterhin ist ein Verfahren bekannt, welches der Herabsetzung des Gehaltes an freiem Chlor in den Rauchgasen einer Verbrennungsanlage dient (vgl. GB 2 040 897). Dabei wird Wasserstoff in die Quenchzone der Verbrennungsapparatur eingespeist, wobei die Menge des Wasserstoffs von der Luftmenge abhängt, die der Brennkammer zugeführt wird. Auf diese Weise ist es gelungen, den Chlorgehalt eines Rauchgases von ursprünglich 600 $mg/m^3$ auf 48 $mg/m^3$ herabzusetzen. Rauchgase mit Chlorgehalten dieser Größenordnung führen aber noch nicht zu chlorfreier Salzsäure und chlorfreien Abgasen.

Schließlich wurde auch ein Verfahren zur Vernichtung von chlorierten Kohlenwasserstoffrückständen unter Gewinnung von Salzsäure bekannt (vgl. GB 1 070 515). Zwar wird hier der Gehalt an freiem Chlor im Rauchgas durch Minimierung des Sauerstoffgehaltes und Einspeisen von Dampf und/oder Wasser in die Brennkammer niedrig gehalten, die Erzeugung von Salzsäure ohne Restgehalte an elementarem Chlor gelingt jedoch anscheinend nicht, da im Restgas nach der HCl-Absorption zum Teil noch freies Chlor gefunden wird.

Auch für die Verbrennung von flüssigen und festen Rückständen unter Erzeugung von Salzsäure sind Verfahren beschrieben worden (vgl. US 39 80 758 und US 44 64 351). Nach diesen Verfahren werden - wie bei den vorher zitierten - die Ausgangsstoffe ebenfalls bei Sauerstoffüberschuß verbrannt. Die Verfahren sind insofern mit den gleichen Nachteilen behaftet, als sich naturgemäß freies Chlor sowohl in der erzeugten Salzsäure als auch im Abgas befindet.

Um die Herstellung AOX-ärmere Salzsäure zu ermöglichen, die auch praktisch frei von elementarem Chlor ist und bei deren Erzeugung ein Abgas anfällt, welches besagte Stoffe allenfalls in Spuren enthält und ohne weiteres in die Atmosphäre abgegeben werden kann, wurde ein Verfahren entwickelt, das im wesentlichen dadurch gekennzeichnet ist, daß man mit organischen Verbindungen kontaminierte chlorwasserstoff- und chlorhaltige Rohgase unter Verwendung von Wasserstoff und/oder wasserstoffhaltigen Brenngasen bei Sauerstoffmangel thermisch behandelt, wobei die Brennstoff- und Luftzufuhr so geregelt wird, daß in der Brennzone kein Ruß entsteht und im Abgas überschüssiger Wasserstoff vorhanden ist (vgl. EP 362 666).

Zwar gelingt es nach diesem Verfahren Chlorierrestgase üblicher Zusammensetzung thermisch zu reinigen, und reine Salzsäure daraus zu erzeugen, jedoch könnten sich in Extremfällen, nämlich wenn sehr hohe Schadstoffmengen in den Rohgasen vorhanden oder Flüssigkeiten umzusetzen sind, bezüglich der Rußbildung Schwierigkeiten ergeben. Dies wäre unerwünscht, weil dadurch sowohl Anlagenteile als auch Produkte verunreinigt würden.

Der vorliegenden Erfindung lag die Aufgabe zugrunde, ein Verfahren zu finden, welches ein hohes Maß an Betriebssicherheit bezüglich der Reaktionsführung besitzt und geeignet ist, auch Rohgase mit extrem hohen Schadstoffgehalten oder chlorhaltige Flüssigkeiten thermisch zu reinigen und zu Chlorwasserstoff umzusetzen, wobei wiederum bei der Absorption des Chlorwasserstoffs ohne weitere Reinigungsschritte praktisch chlorfreie Salzsäure und emittierbares Abgas anfällt.

Die Aufgabe wurde dadurch gelöst, daß einer ersten Verbrennungsstufe die Schadstoffe bei Sauerstoffüberschuß thermisch behandelt werden und der ersten Verbrennungsstufe eine zweite Stufe nachgeschaltet wird, in der die Reaktionsgase aus der ersten Stufe einer weiteren thermischen Behandlung, in diesem Fall

jedoch in reduzierendem Medium, unterworfen werden.

Die Erfindung betrifft somit ein Verfahren zur Herstellung von chlorfreier Salzsäure mit niedrigem AOX-Gehalt durch thermische Behandlung von Chlorwasserstoff oder Chlor oder organischen Verbindungen enthaltenden Rohgasen oder chlorhaltigen Flüssigkeiten und anschließender Absorption des Chlorwasserstoffs in Wasser, dadurch gekennzeichnet, daß die thermische Behandlung in einer ersten Verbrennungsstufe bei Sauerstoffüberschuß durchgeführt wird, wobei der Sauerstoffgehalt der feuchten Reaktionsgase 0,1 bis 11 Vol.-% und die Temperatur in der Brennkammer 800 - 1600 °C beträgt, und die Reaktionsgase sodann in einer zweiten Verbrennungsstufe derart behandelt werden, daß man sie durch Kontaktieren mit einer Stützflamme auf einer Temperatur von 800 bis 1600 °C hält, wobei die Brennstoff- und Sauerstoffzufuhr so eingestellt wird, daß in der Brennkammer kein Ruß entsteht und im feuchten Reaktionsgas ein Wasserstoffgehalt von 1 bis 15 Vol.-% vorhanden ist.

Das nach dem erfindungsgemäßen Verfahren aufzuarbeitende Stoffgemisch (Rohgas) enthält neben Chlorwasserstoff und Chlor auch erhebliche Mengen an chlorierten Kohlenwasserstoffen und anderen organischen Chlorverbindungen, wie z. B. chlorierte Essigsäuren. Es wird einer zweistufen thermischen Behandlung unterworfen, indem es in einer ersten Brennkammer mit einer ausreichenden Brennstoff- und Luftmenge zusammengeführt und verbrannt wird, wobei es unter Umständen zweckmäßig sein kann, die Verbrennungsluft durch Sauerstoff zu ersetzen oder sie zumindest mit Sauerstoff anzureichern.

Als Brennstoffe für die erste Verbrennungsstufe kommen in erster Linie gasförmige Brennstoffe wie Erdgas oder Wasserstoff in Betracht, jedoch können auch Flüssiggas oder leichtes und schweres Heizöl als Brennstoffe eingesetzt werden. In der zweiten Verbrennungsstufe wird man vorzugsweise Brennstoffe mit möglichst geringem Kohlenstoffgehalt verwenden, weil hier die Rußbildung wegen des verfahrensbedingten Sauerstoffmangels eher möglich ist als in der ersten Brennkammer.

Setzt man in der ersten Brennkammer kohlenstoffreiche Brennstoffe ein oder enthält das Rohgas größere Mengen Verbindungen mit höherem Kohlenstoffanteil, so kann die unterstöchiometrische Reaktion in der zweiten Brennkammer gemäß $CO_2 + H_2 \rightarrow CO + H_2O$ zur Bildung von so großen Kohlenmonoxidmengen führen, daß das Abgas nach der HCl-Absorption nicht mehr ohne weiteres emittiert werden kann, weil entsprechende gesetzliche Vorschriften dem entgegenstehen. In diesem Fall wird man - vorzugsweise in einer Nachverbrennungsstufe, unter bestimmten Voraussetzungen aber auch katalytisch - den CO-Anteil im Abgas zu Kohlendioxid umsetzen.

Die Brennkammern bestehen üblicherweise aus einem Stahlgefäß, welches mit einem feuerfesten keramischen Material ausgekleidet ist. Da diese Auskleidung in der Regel nicht gasdicht ist, kann es bei der Verarbeitung von hochkorrosiven, chlorwasserstoff- und insbesondere chlorhaltigen Rohgasen bei den vorherrschenden Manteltemperaturen zu Korrosionserscheinungen an der Innenwand des Stahlgefäßes kommen, in deren Folge Metallionen - vorwiegend Eisenionen - in die erzeugte Salzsäure gelangen. Soll hochreine Salzsäure erzeugt werden, die nicht nur frei von elementarem Chlor und organischen Verbindungen ist, sondern auch anorganische Verbindungen wie z. B. Metallsalze - insbesondere Eisenchloride - allenfalls in Spuren enthält, ist es von Vorteil, die Innenseiten der Stahlgefäße der verwendeten Brennkammern vor dem Aufbringen des porösen keramischen Materials mit einer temperatur- und chemikalienbeständigen Korrosionsschutzschicht - zum Beispiel mit Email - zu versehen.

Unter Umständen reicht es für den gewünschten Effekt aus, wenn die Brennkammer, die mit Sauerstoffüberschuß betrieben wird, dergestalt mit einem zusätzlichen Korrosionsschutz versehen wird.

Das aufzuarbeitende Rohgas wird in die erste Brennkammer eingespeist.

Im Bedarfsfall können Flüssigkeiten in einem vorgeschalteten Verdampfer verdampft und der Dampf den übrigen Rohgasen beigemischt werden. Handelt es sich bei den Flüssigkeiten um höhersiedende Stoffe, kann es vorteilhaft sein, Wasserdampf in den Verdampfer einzuspeisen. Zur Verbesserung der Verbrennung können auch Verbrennungsluft, Brennstoff, falls erforderlich, zusätzliche Dampfmengen und/oder Chlorgas zur Erhöhung des HCl-Gehaltes der Reaktionsgase zugemischt werden.

Die erforderliche Verbrennungstemperatur in der ersten Brennkammer von 800 bis 1600, vorzugsweise 1000 bis 1300 °C, wird durch einen Stützbrenner aufrechterhalten. Das Brennstoff/Luft-Gemisch wird so eingestellt, daß in den Reaktionsgasen am Ausgang der ersten Brennkammer ein Sauerstoffgehalt von 0,1 bis 11, vorzugsweise 0,5 bis 5 Vol.-% gemessen wird.

Aus der ersten Brennkammer gelangen die Reaktionsgase in die zweite Brennkammer. Die hier erforderliche Temperatur von 800 bis 1600, vorzugsweise 1000 bis 1300 °C wird durch Zufuhr von Brennstoff und Luft über einen Brenner aufrechterhalten, wobei das Brennstoff/Luft-Gemisch-Verhältnis so eingestellt wird, daß die Reaktionsgase an der Meßstelle am Ausgang der Brennkammer einen Wasserstoffgehalt von 1 bis 15, vorzugsweise 2 bis 5 Vol.-% aufweisen.

Unter Umständen kann es zur Begrenzung der Brennkammertemperatur nach oben hin erforderlich sein, Wasserdampf in die zweite Brennkammer einzuspeisen.

Die Reaktionsgase werden nach der Kühlung einer oder mehreren Absorptionskolonnen zugeführt.

Der Druck in der ersten Brennkammer wird zweckmäßigerweise durch ein der Anlage nachgeschaltetes Gebläse automatisch konstant gehalten.

Die nach dem erfindungsgemäßen Verfahren hergestellte Salzsäure ist praktisch frei von elementarem Chlor und von organischen Chlorverbindungen und bedarf daher keiner weiteren Behandlung. Auch das Reingas kann ohne weiteres in die Atmosphäre abgegeben werden.

In den Beispielen wurde das erfindungsgemäße Verfahren in einer halbtechnischen Apparatur durchgeführt.

Die Brennkammer 1 hatte ein nutzbares Volumen von 0,25 $m^3$, die Brennkammer 2 ein solches von 0,4 $m^3$.

Alle $m^3$-Angaben beziehen sich auf den Normalzustand (273 K, 1013 h Pa). n.b. bedeutet: nicht bestimmt.

**Beispiel 1**

Folgende Stoffmengen wurden den Brennern bzw. Brennkammern zugeführt:

| | | | $m^3/h$ | |
|---|---|---|---|---|
| | Wasserstoff | Luft | Dampf | Rohgas |
| Brenner 1 | 13,8 | 12,5 | - | - |
| Brennkammer 1 | 23,3 | 19,4 | 56,1 | 62,2 |
| Brenner 2 | 19,3 | 18,4 | - | - |
| Brennkammer 2 | - | - | 14,4 | - |

Die Temperatur in der Brennkammer 1 betrug 1089 °C, der Sauerstoffgehalt am Ausgang (umgerechnet auf feuchtes Reaktionsgas) 4,4 Vol.-%.

Die Temperatur in der Brennkammer 2 betrug 1072 °C, der Wasserstoffgehalt am Ausgang (umgerechnet auf feuchtes Reaktionsgas) 2,5 Vol.-%.

Die analytischen Daten des Rohgases (Chlorierabgases), der erzeugten Salzsäure und des Reingases sind der folgenden Tabelle zu entnehmen:

| | Rohgas | Salzsäure | Reingas |
|---|---|---|---|
| Chlorwasserstoff : | 54,9 Vol.-% | 31,7 Masse-% | 9,0 mg/m$^3$ |
| Chlor : | 32,8 Vol.-% | < 0,05 mg/l | < 0,1 mg/m$^3$ |
| Phosgen : | n.b | n.b. | < 0,07 mg/m$^3$ |
| Monochlormethan : | < 200 mg/m$^3$ | < 25 µg/l | < 1 mg/m$^3$ |
| Dichlormethan : | < 400 mg/m$^3$ | < 100 µg/l | < 10 mg/m$^3$ |
| Trichlormethan : | 196 mg/m$^3$ | 1,3 µg/l | < 0,3 mg/m$^3$ |
| Tetrachlormethan : | 3.777 mg/m$^3$ | 1,1 µg/l | < 0,3 mg/m$^3$ |
| Monochlorethan : | < 200 mg/m$^3$ | < 25 µg/l | < 1 mg/m$^3$ |
| 1,2-Dichlorethan : | < 20 mg/m$^3$ | < 10 µg/l | n. b. |
| 1,1,1-Trichlorethan : | 3,2 mg/m$^3$ | < 0,5 µg/l | n. b. |
| 1,1,2,2-Tetrachlorethan : | 92,1 mg/m$^3$ | < 0,5 µg/l | n. b. |
| Trichlorethen : | 1 mg/m$^3$ | < 0,5 µg/l | < 0,1 mg/m$^3$ |
| Tetrachlorethen : | 35,2 mg/m$^3$ | < 0,5 µg/l | < 0,1 mg/m$^3$ |
| AOX : | - | < 1 mg/l | - |

**Beispiel 2**

In einem Verdampfer wurden durch indirektes Beheizen mit gespanntem Wasserdampf 30,2 kg/h Tetrachlormethan verdampft. Ferner wurden 41,2 m$^3$/h eines Chlorierabgases mit 97,9 Vol.-% HCl und 0,3 Vol.-% Chlor dazugemischt und in die Brennkammer 1 gefördert. Im übrigen ähnelte die Zusammensetzung des Gases derjenigen aus Beispiel 1.

Folgende Stoffmengen wurden insgesamt den Brennern und Brennkammern zugeführt.

| | m³/h | | | Rohgas | kg/h |
|---|---|---|---|---|---|
| | Wasserstoff | Luft | Dampf | Chlorier-abgas | Tetra-chlor-methan |
| Brenner 1 | 19,6 | 60,3 | - | - | - |
| Brennkammer 1 | 11,8 | 27,9 | 21,4 | 41,3 | 30,2 |
| Brenner 2 | 12,1 | 12,4 | - | - | - |
| Brennkammer 2 | - | - | - | - | - |

Die Temperatur in der Brennkammer 1 betrug 1206° C, der Sauerstoffgehalt am Ausgang im feuchten Reaktionsgas 1,0 Vol.-%.

Die Temperatur in der Brennkammer 2 betrug 1193° C, der Wasserstoffgehalt am Ausgang im feuchten Reaktionsgas 4,9 Vol.-%.

Die erzeugte Salzsäure hatte - abgesehen von einer etwas niedrigeren Konzentration - praktisch die gleiche Zusammensetzung wie die aus Beispiel 1.

Im Reingas wurden 3,2 mg $HCl/m^3$ und < 0,1 mg $Chlor/m^3$ gefunden. Alle anderen Analysedaten entsprachen dem Reingas aus Beispiel 1.

**Beispiel 3**

In einem Verdampfer wurden durch indirektes Beheizen mit gespanntem Wasserdampf 32,4 kg/h einer zu gleichen Teilen aus Monochloressigsäure und Dichloressigsäure bestehenden Flüssigkeit verdampft. Ferner wurden 50,7 $m^3/h$ eines Chlorierabgases mit 98,2 Vol.-% HCl und 0,4 Vol.-% Chlor dazugemischt und in die erste Brennkammer gefördert. Im übrigen ähnelte die Zusammensetzung des Gases derjenigen aus Beispiel 1.

Folgende Stoffmengen wurden insgesamt den Brennern und Brennkammern zugeführt:

| | m³/h | | | Rohgas | kg/h | |
|---|---|---|---|---|---|---|
| | Wasserstoff | Luft | Dampf | Chlorier-abgas | MCE | DCE |
| Brenner 1 | 19,0 | 63,0 | - | - | - | - |
| Brennkammer 1 | 9,6 | 55,0 | 21,4 | 50,7 | 16,2 | 16,2 |
| Brenner 2 | 17,7 | 22,9 | - | - | - | - |
| Brennkammer 2 | - | - | - | - | - | - |

Die Temperatur in der Brennkammer 1 betrug 1198° C, der Sauerstoffgehalt am Ausgang im feuchten Reaktionsgas 0,8 Vol.-%.

Die Temperatur in der Brennkammer 2 betrug 1193° C, der Wasserstoffgehalt am Ausgang im feuchten Reaktionsgas 4,6 Vol.-%.

Die erzeugte Salzsäure wies einen HCl-Gehalt von 31,4 Masse-% auf. Die Analysedaten der anderen Stoffe waren mit den in Beispiel 1 aufgeführten Konzentrationen praktisch identisch.

Zusätzlich wurde die Salzsäure auf Monochloressigsäure und Dichloressigsäure geprüft. Beide Substanzen waren nicht nachweisbar.

Im Reingas wurden 8,7 mg $HCl/m^3$ gefunden. Die Gehalte an freiem Chlor, Phosgen und Chlorkohlenwasserstoffen entsprachen den Werten aus Beispiel 1.

## Patentansprüche

1. Verfahren zur Herstellung von chlorfreier Salzsäure mit niedrigem AOX-Gehalt durch thermische Behandlung von Chlorwasserstoff oder Chlor oder organischen Verbindungen enthaltenden Rohgasen oder chlorhaltigen Flüssigkeiten und anschließender Absorption des Chlorwasserstoffs in Wasser, dadurch gekennzeichnet, daß die thermische Behandlung in einer ersten Verbrennungsstufe bei Sauerstoffüberschuß durchgeführt wird, wobei der Sauerstoffgehalt der feuchten Reaktionsgase 0,1 bis 11 Vol.-% und die Temperatur in der Brennkammer 800 - 1600 °C beträgt, und die Reaktionsgase sodann in einer zweiten Verbrennungsstufe derart behandelt werden, daß man sie durch Kontaktieren mit einer Stützflamme auf einer Temperatur von 800 bis 1600 °C hält, wobei die Brennstoff- und Sauerstoffzufuhr so eingestellt wird, daß in der Brennkammer kein Ruß entsteht und im feuchten Reaktionsgas ein Wasserstoffgehalt von 1 bis 15 Vol.-% vorhanden ist.

2. Verfahren nach Anspruch 1, dadurch gekennzeichnet, daß die Verbrennungsluft mit Sauerstoff angereichert wird.

3. Verfahren nach Anspruch 1, dadurch gekennzeichnet, daß man zwei Brennkammern verwendet, wobei die Innenwandung mindestens der ersten Brennkammer vor der Auskleidung mit einem keramischen Material mit einer Korrosionsschutzschicht aus Email oder anderen geeigneten Stoffen versehen worden ist.

Europäisches Patentamt

# EUROPÄISCHER RECHERCHENBERICHT

Nummer der Anmeldung

**EP 91 11 0900**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | GB-A-2 040 897 (E.I. DU PONT DE NEMOURS AND CO.)<br>* Anspruch 1 *<br>– – – | 1 | C 01 B 7/01<br>C 01 B 7/07 |
| A,D | EP-A-0 362 666 (HOECHST)<br>* Anspruch 1 *<br>– – – | 1 | |
| A | DE-A-3 811 860 (CALORIC GESELLSCHAFT FÜR APPARATEBAU)<br>* Ansprüche 1-3 *<br>– – – – – | 1 | |

| RECHERCHIERTE SACHGEBIETE (Int. Cl.5) |
|---|
| C 01 B<br>B 01 D |

Der vorliegende Recherchenbericht wurde für alle Patentansprüche erstellt

| Recherchenort | Abschlußdatum der Recherche | Prüfer |
|---|---|---|
| Den Haag | 23 Oktober 91 | VAN BELLINGEN I.C.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument